# FASCICULE DE BREVET EUROPEEN

(11) **EP 0 709 614 B1**
(45) Date de publication et mention de la délivrance du brevet: **05.03.1997**
(21) Numéro de dépôt: 94402435.5
(22) Date de dépôt: 27.10.1994
(51) Int. Cl.: F16L 41/06

(54) **Dispositif de perçage d'un corps cylindrique d'un amortisseur de véhicule automobile**
Anbohrvorrichtung für einen zylindrischen Körper eines Stossdämpfers für Kraftfahrzeuge
Tapping device for a cylindrical body of a shock damper for a motor vehicle

(43) Date de publication de la demande: 01.05.1996
(73) Titulaire: AUTOMOBILES PEUGEOT, 75116 Paris (FR); AUTOMOBILES CITROEN, 92200 Neuilly-sur-Seine (FR)
(72) Inventeur: Nieser, Stefan, D-66132 Saarbrücken (DE)
(74) Mandataire: Bouget, Lucien

(56) Documents cités:
- EP-A- 0 393 560
- DE-A- 3 725 240
- DE-A- 4 239 573
- FR-A- 2 551 833
- US-A- 3 045 512

## Description

La présente invention concerne un dispositif de perçage d'un corps cylindrique d'un amortisseur de véhicule automobile délimitant une chambre remplie d'huile.

Dans le cadre de la récupération et du recyclage des matériaux des véhicules hors d'usage, il est nécessaire de réaliser préalablement aux opérations de recyclage proprement dites, la dépollution des épaves automobiles et en particulier, il est nécessaire d'assurer une vidange complète des réservoirs de carburant et des chambres d'amortisseur remplies d'huile des véhicules hors d'usage. Ces opérations préalables sont nécessaires, pour des raisons de sécurité, afin d'éviter des explosions, des inflammations ou des dégagements de gaz toxiques du fait de la présence de liquide inflammable dans les réservoirs et amortisseurs.

Le démontage des amortisseurs des épaves automobiles est une opération trop longue et trop coûteuse pour pouvoir être envisagée dans le cadre d'une opération industrielle de récupération de matériaux.

Il est donc nécessaire de réaliser la vidange des chambres d'amortisseur sans démontage préalable des amortisseurs, sur le véhicule qui repose sur le sol d'un atelier ou d'un parc de stockage par l'intermédiaire de ses roues.

On doit donc disposer d'outils de perçage du corps cylindrique de l'amortisseur, de manière à permettre l'écoulement de l'huile à l'extérieur de la chambre de l'amortisseur ; ces outils doivent être mis en oeuvre de manière simple et rapide, donc dans de très bonnes conditions d'économie et d'ergonomie. Ces outils peuvent être conçus de manière à pouvoir être utilisés dans des ateliers de réparation de véhicules automobiles.

Dans le DE-A-37 25 240, on a proposé un dispositif de perçage de tuyaux contenant un fluide sous pression, comprenant un corps d'outil alésé dont l'axe définit l'axe de perçage, relié d'un côté à un cylindre creux coaxial au corps d'outil et du côté opposé à un dispositif de fixation sur le tuyau à percer. Un support d'outil de perçage comportant à une extrémité un profil d'engagement d'un moyen moteur d'entraînement en rotation du support et de l'outil de perçage et à son autre extrémité, un moyen de fixation de l'outil de perçage, est monté avec l'outil de perçage suivant l'axe du corps d'outil et du cylindre. Le support d'outil et l'outil de perçage sont montés rotatifs et glissants dans la direction axiale.

Le corps d'outil comporte une ouverture dans sa paroi latérale débouchant dans un cylindre d'échappement de fluide.

Le DE-A-42 39 573 décrit un dispositif de perçage sensiblement analogue utilisant un foret et dont le corps d'outil fileté peut être vissé dans une ouverture taraudée d'une bride qui est fixée contre la tuyauterie à percer à l'aide d'une courroie.

Les dispositifs selon les DE-A-37 25 240 et 42 39 573 ne comportent pas de moyens assurant un guidage parfait dans la direction axiale et un réglage de l'avance de l'outil, pendant le perçage, de manière à garantir un fonctionnement satisfaisant du dispositif dans tous les cas.

Le but de l'invention est donc de proposer un dispositif de perçage d'un corps cylindrique d'un amortisseur de véhicule automobile délimitant une chambre remplie d'huile, comportant :
- un corps d'outil traversé par un alésage dont l'axe constitue l'axe de perçage de l'outil,
- un ensemble de bridage comportant un mors solidaire d'une partie d'extrémité du corps d'outil ayant une surface d'appui sur le corps cylindrique de l'amortisseur et une ouverture dans le prolongement axial de l'alésage du corps d'outil ainsi qu'un moyen de serrage du mors contre le corps d'amortisseur,
- un cylindre solidaire d'une partie du corps d'outil située à l'opposé de l'ensemble de bridage dans la direction axiale, comportant une chambre cylindrique ayant pour axe l'axe de l'outil et communiquant avec l'alésage du corps de l'outil,
- un support de foret disposé suivant l'axe de l'outil et monté mobile dans la chambre cylindrique en translation dans la direction de l'axe et en rotation autour de l'axe comprenant à une première extrémité, un profil d'engagement d'un moyen moteur d'entraînement en rotation et à une deuxième extrémité opposée dans la direction axiale, un moyen de fixation d'un foret,
- un foret de perçage, et
- un moyen moteur d'entraînement en rotation du support de foret et du foret.
ce dispositif permettant de réaliser le perçage du corps de l'amortisseur laissé dans sa position de service sur le véhicule automobile et la vidange de la chambre de l'amortisseur, de manière efficace et sans risque pour le personnel chargé de la vidange et de la récupération d'huile.

Dans ce but, le support de foret est réalisé sous la forme d'un arbre comportant entre sa première extrémité et sa seconde extrémité, un disque coaxial au support ayant un diamètre extérieur supérieur au diamètre du support de foret et sensiblement égal au diamètre intérieur de la chambre du cylindre et présentant un filetage sur sa partie périphérique destinée à venir en contact avec la surface intérieure de la chambre du cylindre pour réaliser le guidage du support de foret à l'intérieur de la chambre du cylindre qui est remplie d'huile, le disque du support de foret séparant la chambre en deux compartiments entre lesquels l'huile est susceptible de passer par l'intermédiaire d'un espace entre le filetage du disque et la surface intérieure de la chambre.

Afin de bien faire comprendre l'invention, on va maintenant décrire, à titre d'exemple non limitatif, en se référant aux figures jointes en annexes, un dispositif de perçage de corps d'amortisseur de véhicule automobile suivant l'invention et sa mise en oeuvre pour assurer la vidange d'une chambre d'amortisseur.

La figure 1 est une vue schématique en élévation latérale d'un dispositif suivant l'invention en position de perçage d'un corps d'amortisseur.

Les figures 2 et 3 sont des vues de dessus schématiques du dispositif de perçage suivant l'invention au cours de deux phases successives de mise en place sur un corps d'amortisseur.

Les figures 4,5 et 6 sont des vues en coupe par un plan horizontal passant par l'axe de perçage, du dispositif au cours de trois phases successives d'une opération de perçage.

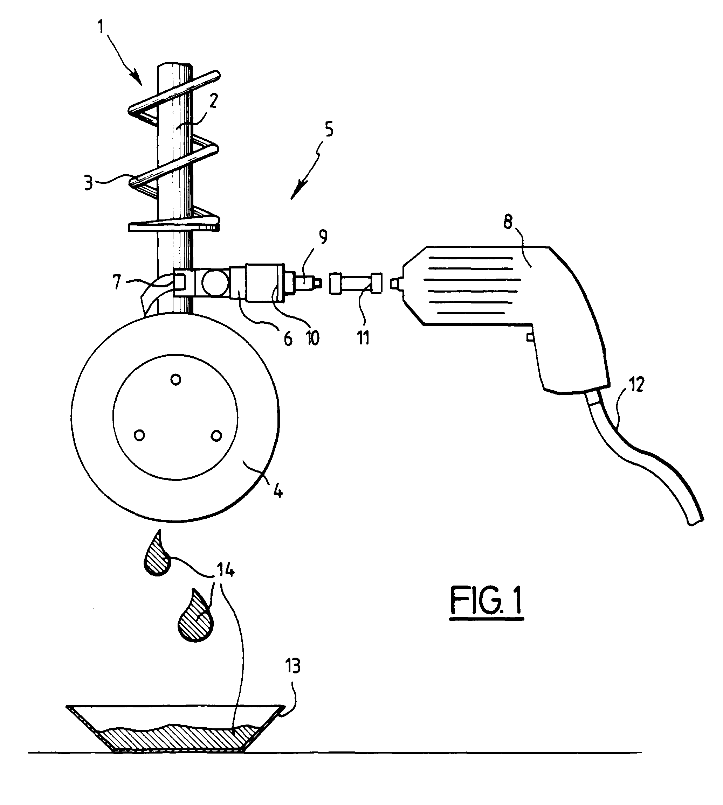

Sur la figure 1, on voit un amortisseur désigné de manière générale par le repère 1 et comportant un corps d'amortisseur 2 de forme cylindrique, un ressort 3 entourant le corps d'amortisseur sur une partie de sa longueur et un étrier 4 fixé à la partie inférieure du corps d'amortisseur.

Le dispositif de perçage désigné de manière générale par le repère 5 comporte un corps d'outil 6 muni de moyens 7 pour sa fixation sur le corps d'amortisseur 2 et un moyen moteur 8 d'entraînement en rotation d'un support de foret 9 monté rotatif à l'intérieur d'un cylindre 10 solidaire du corps 6 de l'outil.

L'entraînement en rotation du support de foret 9 par le dispositif moteur 8 est réalisé par l'intermédiaire d'un adaptateur 11. Le moyen moteur 8 d'entraînement en rotation du support de foret 9 est constitué de préférence par une visseuse pneumatique reliée à un conduit souple 12 d'alimentation en air comprimé.

Un bac 13 de récupération de l'huile contenue dans la chambre de l'amortisseur 1 est disposé sur le sol à l'aplomb de l'amortisseur 1.

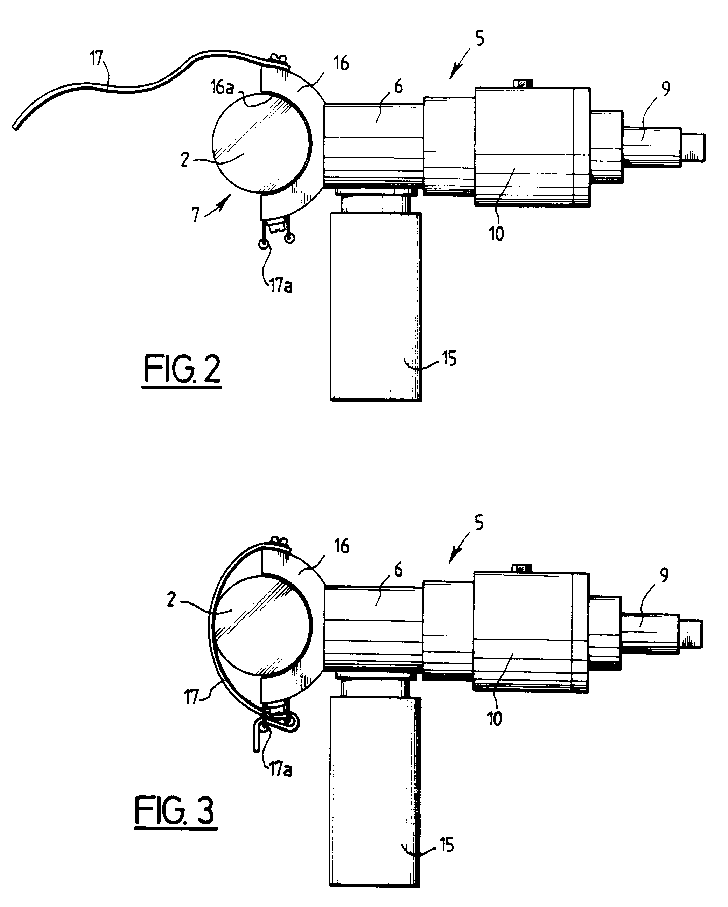

Sur les figures 2 et 3, on voit une partie du dispositif 5 comportant le corps d'outil 6, le cylindre 10 dans lequel est monté le support de foret 9 et l'ensemble 7 de fixation du corps d'outil 6 sur le corps cylindrique d'amortisseur 2.

Sur le corps d'outil 6 est également fixé, dans une disposition latérale, un cylindre 15 d'échappement du gaz sous pression contenu dans la chambre de l'amortisseur.

L'ensemble de serrage 7 pour la fixation du corps d'outil 6 sur le corps de l'amortisseur 2 comporte un mors de serrage 16 et une courroie de serrage souple 17 fixée à l'une de ses extrémités sur le mors de serrage 16.

Le mors de serrage 16 solidaire d'une première extrémité du corps d'outil 6 présente la forme d'un demi cylindre et comporte une surface interne 16a d'appui sur la surface externe du corps d'amortisseur 2 de forme cylindrique, ayant un rayon identique au rayon de la surface externe du corps d'amortisseur 2.

Le mors 16 est donc susceptible de venir s'appliquer de manière ajustée contre la surface extérieure du corps de l'amortisseur 2.

La courroie de serrage 17 est fixée sur une partie d'extrémité du mors semi cylindrique 16 qui porte à son autre extrémité, un dispositif de serrage à rouleaux 17a permettant d'assurer le serrage et la fixation de la courroie souple 17, comme représenté sur la figure 3.

La courroie 17 assure alors le serrage du mors 16 contre la surface extérieure du corps d'amortisseur 2 et la fixation du corps d'outil 6 portant à son extrémité opposée au mors de serrage 16, le cylindre 10 dans lequel est monté le support de foret 9. Comme il est visible sur la figure 2, pour réaliser la fixation du corps d'outil 6 portant le cylindre 10 sur le corps d'amortisseur 2, on engage la surface interne 16a du mors 16 sur la surface externe du corps d'amortisseur 2, puis on engage l'extrémité libre de la courroie 17 non reliée au mors 16 sur le dispositif de serrage à rouleaux 17a. La courroie 17 passe de manière alternée sur les deux rouleaux du dispositif 17a qui assure le serrage et le maintien de l'outil contre le corps d'amortisseur, par l'intermédiaire du mors de serrage 16.

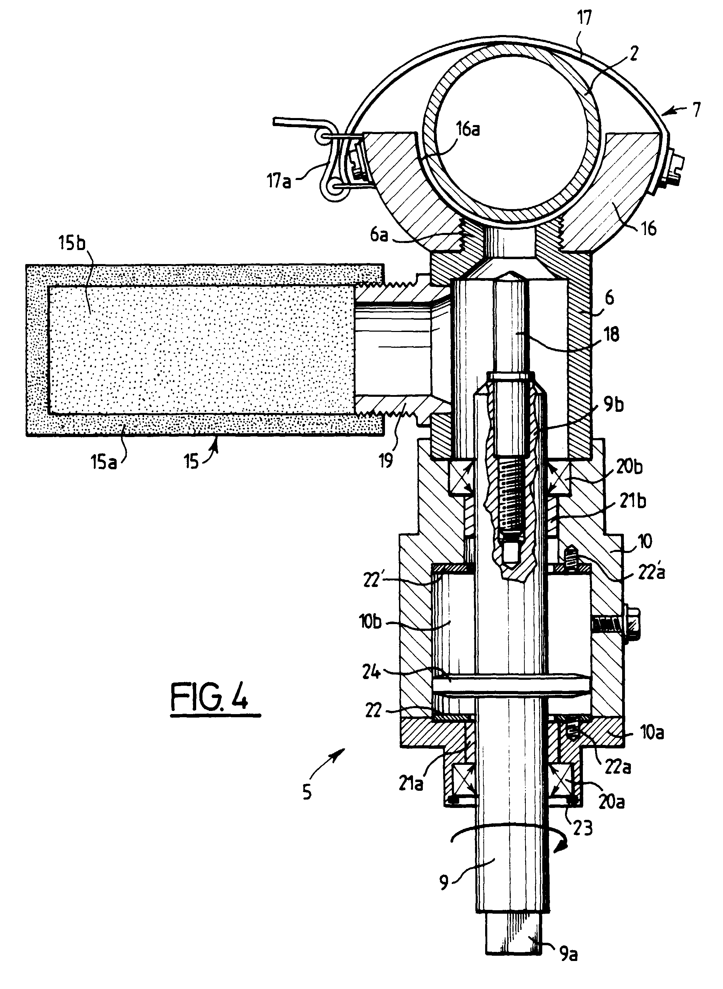

Comme il est visible sur les figures 4,5 et 6, le corps d'outil 6 présente une forme tubulaire et une partie d'extrémité 6a qui est filetée extérieurement sur laquelle on fixe par vissage le mors 16 qui comporte une ouverture taraudée traversante permettant de recevoir la partie d'extrémité 6a du support d'outil 6.

L'alésage intérieur du corps d'outil tubulaire 6 présente un axe 18 qui constitue l'axe de perçage de l'outil.

A l'extrémité du corps d'outil opposée au mors de serrage 16 dans la direction axiale 18 est fixé, de manière rigidement solidaire, un cylindre 10 comportant un alésage interne dont l'axe est confondu avec l'axe 18 du corps d'outil 6 constituant l'axe de perçage de l'outil.

La paroi latérale du corps d'outil tubulaire 6 est de plus percée d'une ouverture dans une direction radiale perpendiculaire à la direction 18 dans laquelle est fixée une pièce de support 19 filetée extérieurement permettant la fixation du cylindre d'échappement 15.

Le cylindre d'échappement 15 comporte une enveloppe cylindrique fermée par un fond à l'une de ses extrémités et comportant une partie taraudée à son extrémité opposée, cette extrémité taraudée pouvant être vissée sur le filetage de la pièce 19 pour réaliser la fixation de l'enveloppe 15a du cylindre 15 sur le corps d'outil 6.

L'enveloppe 15a du cylindre 15 est remplie d'un matériau sous forme de mousse et la paroi 15a est elle-même poreuse pour permettre l'échappement vers l'atmosphère extérieure de gaz sous pression provenant de l'alésage intérieur du corps d'outil 6.

L'alésage interne du cylindre 10 comporte plusieurs parties successives séparées les unes des autres par des épaulements. Sur la partie d'extrémité du cylindre 10 opposée au corps d'outil 6, est fixé par l'intermédiaire de vis, un couvercle 10a comportant une ouverture traversante prolongeant l'alésage du cylindre 10 et disposée coaxialement par rapport à cet alésage.

Dans l'alésage du couvercle 10a est fixé un palier 20a maintenu à l'intérieur de l'alésage du couvercle 10a par une bague 21a maintenue en place dans l'ouverture du couvercle 10a par une rondelle 22 fixée sur la surface intérieure du couvercle 10a par l'intermédiaire d'une goupille 22a.

Le palier 20a réalisé sous la forme d'un coussinet est fixé du côté opposé à la bague 21a, à l'intérieur du couvercle 10a par une rondelle déformable 23 telle qu'un circlips.

Dans sa partie opposée au couvercle 10a dans la direction axiale, le cylindre 10 comporte un alésage d'extrémité dans lequel est fixé un palier rotatif et de glissement 20b réalisé sous la forme d'un coussinet, par l'intermédiaire d'une bague 21b et une rondelle 22' maintenue par une goupille 22'a à l'intérieur de l'alésage du cylindre 10.

Entre ses parties d'extrémité dans lesquelles sont disposés les paliers 20a et 20b, l'alésage du cylindre 10 présente un diamètre maximal et constitue une chambre 10b dans laquelle le support de foret 9 réalisé sous la forme d'un arbre est guidé en rotation et en translation par l'intermédiaire d'un disque 24 dont la surface périphérique présente un filetage.

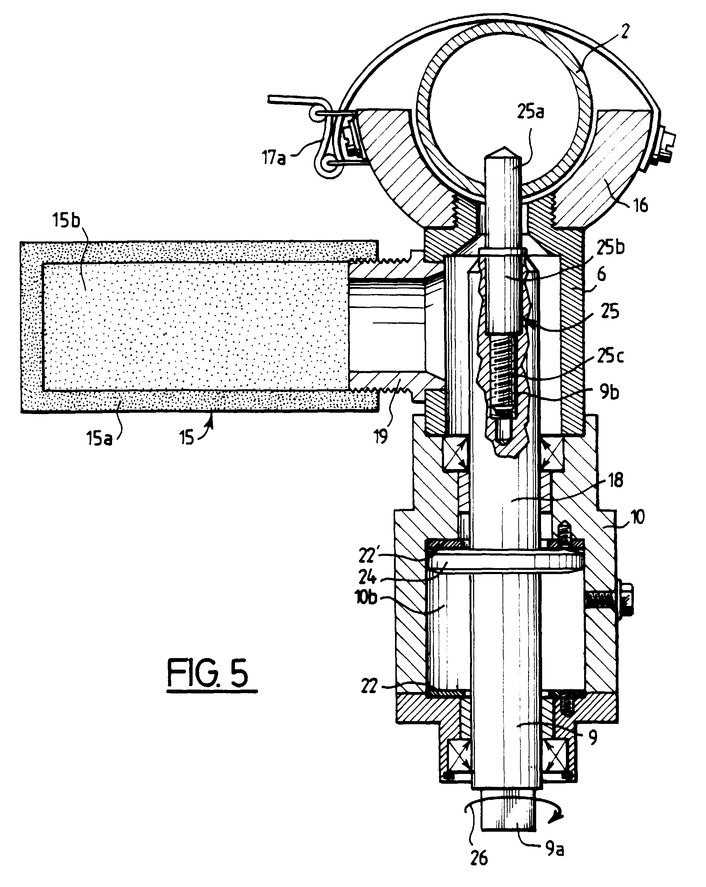

Le support de foret 9 monté rotatif et glissant dans les paliers 20a et 20b est guidé à l'intérieur de la chambre 10b par le disque fileté 24 de manière à pouvoir se déplacer en translation entre une position reculée représentée sur les figures 4 et 5 et une position avancée représentée sur la figure 5.

Les déplacements en translation dans la direction de l'axe 18 du support de foret 9 réalisé sous la forme d'un arbre sont limités par les parties d'extrémité de la chambre 10b constituées par les rondelles 22 et 22'.

Dans sa position avancée représentée sur la figure 5, le support de foret 9 est en butée contre la rondelle 22' par l'intermédiaire du disque 24.

Le support de foret 9 comporte à une de ses extrémités une partie profilée 9a ayant la forme d'un carré d'entraînement par l'intermédiaire de laquelle l'arbre 9 peut être entraîné en rotation autour de l'axe 18, comme représenté par la flèche 26.

A son extrémité opposée à la partie profilée d'entraînement 9a, l'arbre de support 9 comporte un alésage 9b de direction axiale comportant une partie d'entrée lisse et une partie taraudée d'un diamètre inférieur au diamètre de la partie lisse.

L'alésage 9b permet de réaliser le montage d'un foret 25 comportant une première partie 25a constituant la partie active du foret assurant le perçage, une seconde partie lisse 25b assurant l'appui du foret dans la partie d'entrée de l'alésage 9b et une troisième partie 25c destinée à être vissée dans la partie taraudée de l'alésage 9b. On réalise ainsi le montage du foret 25 sur le support de foret 9, dans une disposition parfaitement coaxiale.

La chambre 10b du cylindre 10 est remplie d'huile et le disque 24 qui agit comme un piston monté rotatif à l'intérieur de la chambre 10b sépare la chambre 10b en deux compartiments.

Pendant les déplacements en translation du support de foret 9, l'huile passe d'un compartiment de la chambre 10b à l'autre compartiment à travers l'espace délimité entre le filet périphérique du disque 24 et la surface intérieure de la chambre 10b. On obtient ainsi un laminage de l'huile et un amortissement des déplacements du support de foret 9 ainsi q'un pompage de l'huile d'une chambre à l'autre, lors de la rotation du foret.

Comme représenté sur la figure 1, pour réaliser la mise en service du dispositif de perçage 5, on fixe par l'intermédiaire de l'ensemble de bridage 7, le corps d'outil 6 solidaire du cylindre 10 dans lequel est monté mobile le support de foret 9, sur le corps d'un amortisseur 2 entre l'extrémité inférieure du ressort 3 et l'étrier 4. Le support de foret 9 équipé d'un foret 25 est en position reculée comme représenté sur la figure 4.

On utilise un adaptateur comportant à chacune de ses extrémités une partie profilée creuse de forme carrée. Une des parties profilées de forme carrée de l'adaptateur (11) est engagée sur la partie profilée d'extrémité 9a du support de foret 9. L'autre partie profilée creuse de l'adaptateur 11 reçoit une partie d'extrémité de forme carrée de l'arbre d'entraînement d'une visseuse pneumatique 8.

On met en rotation le support de foret 9 et le foret 25 par l'intermédiaire de la visseuse pneumatique 8 alimentée en air comprimé par la conduite 12.

On réalise l'avance du support de foret 9 et du foret 25 dans la direction axiale 18 par poussée sur le support 9 par l'intermédiaire de la visseuse 8.

La partie de perçage 25a du foret 25 vient en contact avec la surface extérieure du corps cylindrique d'amortisseur 2, à travers l'alésage de la partie d'extrémité 6a du corps d'outil 6 engagée dans l'ouverture traversante du mors 16.

Le foret 25 entraîné en rotation et sur lequel on exerce une poussée manuelle par l'intermédiaire du support 9 et de la visseuse 8 réalise le perçage de la paroi du corps d'amortisseur 2 de forme tubulaire, comme représenté sur la figure 5.

La phase de perçage par avance et mise en rotation du foret s'arrête lorsque le disque 24 vient en butée sur la rondelle 22' à l'intérieur de l'alésage du cylindre 10.

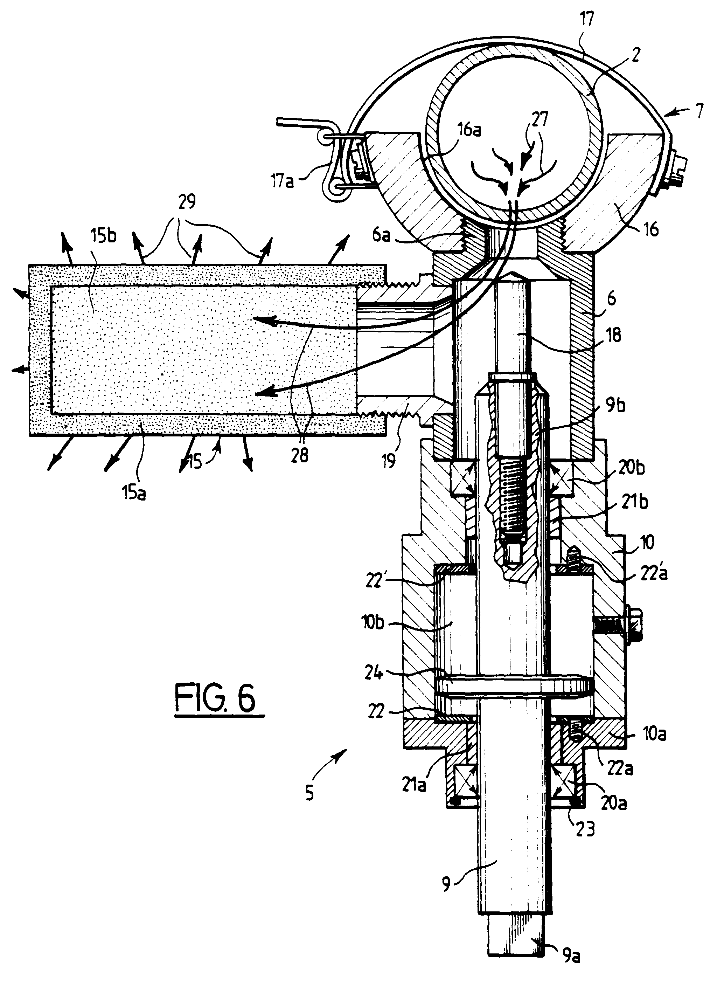

On assure alors le recul du foret 25 et du support de foret 9 qui revient dans sa position reculée représentée sur la figure 6.

Le gaz sous pression contenu à l'intérieur du corps d'amortisseur 2 pénètre à l'intérieur de l'alésage du corps d'outil 6 par le perçage qui vient d'être réalisé, puis par l'intermédiaire de l'ouverture latérale et de la pièce tubulaire 19, à l'intérieur du cylindre d'échappement 15 rempli d'une mousse 15b. Le trajet du gaz entre la chambre de l'amortisseur 2 et le cylindre d'échappement 15 a été schématisé par les flèches 27 et 28.

L'huile contenue dans la chambre de l'amortisseur qui est entraînée par le flux de gaz 27,28 à l'intérieur du cylindre 15 est arrêtée par la mousse 15b, de sorte que le gaz qui s'échappe par les ouvertures de l'enveloppe 15a du cylindre 15 est exempt de toute trace d'huile provenant de l'amortisseur. On évite ainsi toute projection d'huile ou plus généralement de liquide d'amortissement, lorsqu'on a réalisé le perçage de la paroi du corps de l'amortisseur.

Lorsque l'amortisseur contient un gaz à forte pression, par exemple un gaz à une pression de l'ordre de 50 bars, au moment où le foret pénètre dans la chambre de l'amortisseur, les gaz sont éjectés violemment et repoussent le foret et le porte-foret à l'intérieur de l'alésage du corps d'outil 6 et du cylindre 10, dans la direction axiale 18.

Les gaz sont susceptibles de passer d'un compartiment à l'autre de la chambre entre le filet et la surface intérieure de la chambre 10b du cylindre. On amortit ainsi le choc dû à l'échappement des gaz sous pression après le perçage.

Pendant le perçage, lorsque le support de foret et le foret sont mis en rotation, l'huile est pompée d'un compartiment à l'autre de la chambre 10b par la partie filetée du disque 24 se déplaçant à l'intérieur de la chambre 10b. On obtient ainsi une régulation de la vitesse d'avance du foret à l'intérieur du corps d'outil 6 et à travers la paroi du corps d'amortisseur 2.

Après perçage et échappement du gaz contenu dans la chambre de l'amortisseur, on débloque les rouleaux 17a du dispositif de serrage de la courroie 17 et on sépare la courroie 17 du dispositif de serrage à rouleaux 17a.

L'outil est séparé du corps d'amortisseur et l'huile 14 contenue dans l'amortisseur coule dans le bac de récupération 13 disposé sur le sol à l'aplomb de l'amortisseur.

Le dispositif suivant l'invention permet donc de réaliser de manière simple et rapide la mise en place de l'outil et le perçage de l'amortisseur. Dans le cas où l'amortisseur renferme un gaz sous pression, le dispositif permet également de réaliser la décompression de l'amortisseur après perçage et l'échappement du gaz sans projection d'huile.

Le dispositif selon l'invention permet donc d'effectuer la vidange de l'huile des amortisseurs de véhicules usagés de manière simple et rapide et sans risque pour le personnel chargé de cette opération.

Le dispositif de perçage suivant l'invention est conçu de manière telle qu'il puisse être utilisé facilement non seulement par le personnel des unités de récupération industrielle de véhicules mais encore par le personnel des ateliers de réparation de véhicules automobiles.

L'invention ne se limite pas au mode de réalisation qui a été décrit.

C'est ainsi que le corps d'outil et le cylindre peuvent présenter une forme différente de celle qui a été décrite, ces deux éléments pouvant être réalisés éventuellement en une seule pièce ; la réalisation sous forme de deux pièces différentes permet cependant de faciliter le montage du palier du support de foret et du foret.

On peut également concevoir des dispositifs de perçage ne comportant pas de cylindre d'échappement de gaz analogues au cylindre 15 décrit dans le cas de l'exemple de réalisation.

Le dispositif de serrage rapide du mors 16 peut être réalisé sous une forme différente d'une courroie et de rouleaux de serrage.

L'invention pourrait s'appliquer dans le cas du perçage d'éléments tubulaires de forme cylindrique différents d'un corps d'amortisseur.

De manière générale, le dispositif suivant l'invention peut être utilisé pour de nombreuses applications dans les ateliers de réparation ou de recyclage de véhicules automobiles.

## Revendications

1. Dispositif de perçage d'un corps cylindrique (2) d'un amortisseur de véhicule automobile délimitant une chambre remplie de liquide, comportant :
- un corps d'outil (6) traversé par un alésage dont l'axe constitue l'axe (18) de perçage de l'outil (5),
- un ensemble de bridage (7) comportant un mors (16) solidaire d'une partie d'extrémité (6a) du corps d'outil (6), ayant une surface d'appui (16a) sur le corps cylindrique (2) de l'amortisseur et une ouverture dans le prolongement axial de l'alésage du corps d'outil (6) ainsi qu'un moyen de serrage (17,17a) du mors (16) contre le corps d'amortisseur (2),
- un cylindre (10) solidaire d'une partie du corps d'outil (6) située à l'opposé de l'ensemble de bridage (7) dans la direction axiale (18) comprenant une chambre cylindrique (10b) ayant pour axe l'axe (18) de l'outil (5) et communiquant avec l'alésage du corps de l'outil (6),
- un support de foret (9) disposé suivant l'axe (18) de l'outil (5) et monté mobile dans la chambre cylindrique (10b) en translation dans la direction de l'axe (18) et en rotation autour de l'axe (18) comprenant à une première extrémité, un profil d'engagement (9a) d'un moyen moteur d'entraînement en rotation (8) et à une seconde extrémité opposée dans la direction axiale (18) au profil d'engagement (9a), un moyen de fixation (9b) d'un foret (25),
- un foret de perçage (25),
- un moyen moteur (8) d'entraînement en rotation du support de foret (9) et du foret (25), caractérisé par le fait que le support de foret (9) est réalisé sous la forme d'un arbre comportant entre sa première extrémité (9a) et sa seconde extrémité (9b), un disque coaxial au support (9) ayant un diamètre extérieur supérieur au diamètre du support de foret (9) et sensiblement égal au diamètre intérieur de la chambre (10b) du cylindre (10) et présentant un filetage sur sa partie périphérique destinée à venir en contact avec la surface intérieure de la chambre (10b) du cylindre (10) pour réaliser le guidage du support de foret (9) à l'intérieur de la chambre (10b) du cylindre (10) qui est remplie d'huile, le disque (24) du support de foret (9) séparant la chambre (10b) en deux compartiments entre lesquels l'huile est susceptible de passer par l'intermédiaire d'un espace entre le filetage du disque (24) et la surface intérieure de la chambre (10b).

2. Dispositif suivant la revendication 1, caractérisé par le fait que le cylindre (10) comporte un couvercle (10a) à son extrémité opposée au corps d'outil (6) percé d'une ouverture dans laquelle est monté un coussinet (20a) de guidage du support de foret (9).

3. Dispositif suivant l'une quelconque des revendications 1 et 2, caractérisé par le fait que le corps d'outil (6) comporte une partie d'extrémité (6a) filetée extérieurement et que l'ouverture traversante du mors (16) comporte un taraudage susceptible de recevoir le filetage externe de la partie (6a) du support d'outil (6).

4. Dispositif suivant l'une quelconque des revendications 1, 2 et 3, caractérisé par le fait que le moyen de serrage (17,17a) du mors (16) de l'ensemble de bridage (7) est constitué par une courroie fixée à l'une de ses extrémités sur une première partie d'extrémité du mors (16) et un dispositif de serrage à rouleaux (17a) fixé sur une seconde partie d'extrémité du mors (16).

5. Dispositif suivant l'une quelconque des revendications 1 à 4, dans lequel le corps d'outil (6) comporte une ouverture dans une disposition latérale débouchant dans son alésage par l'intermédiaire de laquelle l'alésage du corps d'outil (6) est mis en communication avec le volume interne d'un cylindre d'échappement (15) fixé dans une disposition latérale sur le corps d'outil (6), au niveau de l'ouverture latérale débouchant dans l'alésage du corps d'outil (6), caractérisé par le fait que le cylindre d'échappement comporte une enveloppe cylindrique (15a) ayant une extrémité fermée par un fond et une extrémité ouverte reliée au corps d'outil (6) au niveau de l'ouverture latérale du corps d'outil (6) et une matière de remplissage (15b) de l'enveloppe (15a) constituée par un matériau poreux sous forme de mousse.

6. Dispositif suivant l'une quelconque des revendications 1 à 5, caractérisé par le fait qu'il comporte de plus un adaptateur (11) pour réaliser l'entraînement en rotation du support de foret (9), par l'intermédiaire du moyen moteur (8).

7. Dispositif suivant l'une quelconque des revendications 1 à 6, caractérisé par le fait que le moyen moteur d'entraînement en rotation (8) est une visseuse automatique.

## Patentansprüche

1. Anbohrvorrichtung für einen zylindrischen Körper (2) eines Stoßdämpfers in einem Kraftfahrzeug, welcher eine mit einem Fluid befüllte Kammer bildet und die folgendes aufweist:
- einen Werkzeugkörper (6), welcher von einer Zylinderbohrung durchquert wird, deren Achse die Bohrachse (18) des Werkzeugs (5) bildet,
- eine Anflanschung (7) mit einer Spannbacke (16), welche mit einem Endabschnitt (6a) des Werkzeugkörpers (6) fest verbunden ist, der eine Fläche (16a) für die Anlage an dem zylindrischen Körper (2) des Stoßdämpfers bildet, sowie eine Bohrung in der axialen Verlängerung der Zylinderbohrung des Werkzeugkörpers (6), und schließlich ein Mittel für die Verspannung (17, 17a) der Spannbacke (16) an dem Stoßdämpferkörper (2) aufweist,
- einen zylinder (10), welcher mit einem Abschnitt des Werkzeugkörpers (6), der in der axialen Richtung (18) gegenüber der Anflanschung (7) angeordnet ist, fest verbunden ist, und eine zylindrische Kammer (10b) aufweist, deren Achse mit der Achse (18) des Werkzeugs (5) zusammenfällt und die mit der zylinderbohrung des Werkzeugkörpers (6) kommuniziert,
- einen Bohrerhalter (9), welcher in der Achse (18) des Werkzeugs (5) angeordnet und in translatorischer Richtung beweglich in Richtung der Achse (18) und drehend um die Achse (18) angeordnet ist, und welcher an einem ersten Ende ein Eingriffsprofil (9a) für einen Motor (8) für den drehenden Antrieb enthält, und an einem zweiten in der axialen Richtung (18) dem Eingriffsprofil (9a) gegenüberliegenden Ende ein Mittel für die Befestigung eines Bohrers (25) aufweist,
- einen Bohrer (25),
- einen Motor (8) für den drehenden Antrieb des Bohrerhalters (9) und des Bohrers (25),
**dadurch gekennzeichnet, daß**
der Bohrerhalter (9) die Form einer Welle hat, welche zwischen ihrem ersten Endabschnitt (9a) und ihrem zweiten Endabschnitt (9b) einen zu der Halterung (9) koaxial verlaufenden Teller mit einem Außendurchmesser enthält, welcher größer ist, als der Durchmesser des Bohrerhalters (9) und weitgehend gleich dem Innendurchmesser der Kammer (10b) des Zylinders (10) ist, und der an seinem Umfang Außengewinde aufweist, welche dafür bestimmt sind, mit der Innenfläche der Kammer (10b) des Zylinders (10) in Berührung zu treten, um die Führung des Bohrerhalters (9) im Inneren der mit Öl befüllten Kammer (10b) des Zylinders (10) zu gewährleisten, wobei der Teller (24) des Bohrerhalters (9) die Kammer (10b) in zwei Abteile unterteilt, in die das Öl über einen Freiraum zwischen den Außengewinden des Tellers (24) und die Innenfläche der Kammer (10b) abfließen kann.

2. Vorrichtung nach Anspruch 1,
**dadurch gekennzeichnet, daß**
der Zylinder (10) an seinem gegenüber dem Werkzeugkörper (6) liegenden Ende einen Deckel (10a) aufweist, welcher mit einer Bohrung durchbohrt ist, in die ein Futter (20a) für die führung des Bohrerhalters (9) eingesetzt ist.

3. Vorrichtung nach einem der Ansprüche 1 oder 2,
**dadurch gekennzeichnet, daß**
der Werkzeugkörper (6) an seinem Umfang einen gewindeten Endabschnitt (6a) aufweist, und dadurch, daß die durchquerende Bohrung der Spannbacke (16) ein Innengewinde aufweist, in welches das Außengewinde des Abschnittes (6a) des Werkzeughalters (6) eingeschraubt werden kann.

4. Vorrichtung nach einem der Ansprüche 1, 2 oder 3,
**dadurch gekennzeichnet, daß**
das Mittel (17, 17a) für die Verspannung der Spannbacke (16) der Anflanschung (7) aus einem Spannriemen besteht, welcher mit einem seiner Enden an einem ersten Endabschnitt der Spannbacke (16) befestigt ist, sowie eine mit Rollen versehene Spannvorrichtung (17a) aufweist, welche an einem zweiten Endabschnitt der Spannbacke (16) befestigt ist.

5. Vorrichtung nach einem der Ansprüche 1 bis 4,
**dadurch gekennzeichnet, daß**
der Werkzeugkörper (6) eine in seitlicher Richtung angeordnete Bohrung aufweist, welche in seine zylinderbohrung mündet, und mit deren Hilfe die zylinderbohrung des Werkzeugkörpers (6) mit dem Innenvolumen eines Auslaßzylinders (15) kommuniziert, welcher in seitlicher Richtung an dem Werkzeugkörper (6) in Höhe der seitlichen Bohrung befestigt ist, und welche in die zylinderbohrung des Werkzeugkörpers (6) mündet,
**dadurch gekennzeichnet, daß**
der Auslaßzylinder eine zylindrische Umwandung (15a) mit einem Endabschnitt aufweist, welcher durch einen Boden verschlossen ist, sowie ein offenes Ende enthält, das an die seitliche Bohrung des Werkzeugkörpers (6) angeschlossen ist, sowie ein Füllmaterial (15b) für die Umwandung (15a) enthält, welches aus einem porösen Schaummaterial besteht.

6. Vorrichtung nach einem der Ansprüche 1 bis 5,
**dadurch gekennzeichnet, daß**
sie außerdem einen Adapter (11) enthält, um mit Hilfe eines Motors (8) den drehenden Antrieb des Bohrerhalters (9) zu bewerkstelligen.

7. Vorrichtung nach einem der Ansprüche 1 bis 6,
**dadurch gekennzeichnet, daß**
der Motor (8) für den drehenden Antrieb ein automatischer Schrauber ist.

## Claims

1. Tapping device for a cylindrical body (2) of a shock absorber for a motor vehicle, defining a chamber filled with oil, comprising:
- a tool body (6) through which there passes a bore whose axis constitutes the tapping axis (18) of the tool (5),
- a strapping assembly (7) comprising a clamp jaw (16) integral with a portion (6a) of the end of the tool body (6) having a support surface (16a) on the cylindrical body (2) of the shock absorber and an opening in the axial extension of the bore of the tool body (6), as well as a clamping means (17, 17a) for the clamp jaw (16) against the shock absorber body (2),
- a cylinder (10) integral with a portion of the tool body (6) situated opposite the strapping assembly (7) in the axial direction (18), comprising a cylindrical chamber (10b) having as its axis the axis (18) of the tool (5), and communicating with the bore in the tool body (6),
- a drill support (9) disposed in accordance with the axis (18) of the tool (5) and mounted to move in the cylindrical chamber (10b) in a translational manner in the direction of the axis (18 and in rotation about the axis (18), comprising at the first end an engagement profile (9a) of a rotational driving motive means (8) and at a second opposite end in the axial direction (18), a means (9b) of securing a drill (25),
- a tapping drill (25) and,
- a rotational driving motive means (8) for the drill support (9) and for the drill (25), characterised in that the drill support (9) is made in the form of a shaft comprising between its first end (9a) and its second end (9b) a disc coaxial with the support (9) and having an external diameter greater than the diameter of the drill support (9) and substantially equal to the internal diameter of the chamber (10b) of the cylinder (10), and having a threaded portion on its peripheral portion, intended to come into contact with the internal surface of the chamber (10b) of the cylinder (10) in order to carry out guidance of the drill support (9) inside the chamber (10b) of the cylinder ; (10) which is filled with oil, the disc (24) of the drill support (9) separating the chamber (10b) into two compartments between which the oil is capable of passing through the intermediary of a space between the threading on the disc (24) and the internal surface of the chamber (10b).

2. Device according to Claim 1, characterised in that the cylinder (10) comprises a lid (10a) at its end opposite the tool body (6), traversed by an opening in which there is mounted a bearing bush (20a) for guidance of the drill support (9).

3. Device according to any one of Claims 1 and 2, characterised in that the tool body (6) comprises a terminal portion (6a) externally threaded, and in that the traversing opening of the clamp (16) comprises a tapping capable of receiving the external threading of the portion (6a) of the tool support (6).

4. Device according to any one of Claims 1,2 and 3, characterised in that the clamping means (17, 17a) of the clamp (16) of the strapping assembly (7) is constituted by a strap fixed by one of is ends on a first terminal portion of the clamp (16) and a roller clamping device (17a) fixed on a second terminal portion of the clamp (16).

5. Device according to any one of Claims 1 to 4, in which the tool body (6) comprises an opening in a lateral arrangement opening in its bore via which the bore of the tool body (6) communicates with the internal volume of an escapement cylinder (15) fixed in a lateral arrangement on the tool body (6) at the level of the lateral opening into the bore of the tool body (6), characterised in that the escape cylinder comprises a cylindrical envelope (15a) having one end closed by a base and an open end connected to the tool body (6) at the level of the lateral opening of the tool body (6) and a filling material (15b) of the envelope (15a) constituted by a porous material in the form of foam.

6. Device according to any one of Claims 1 to 5, characterised in that it comprises in addition an adapter (11) for causing the drill support (9) to be rotationally driven, via the motive means (8).

7. Device according to any one of Claims 1 to 6, characterised in that the rotational driving motive means (8) is an automatic screwdriver.
